Europäisches Patentamt

European Patent Office

Office européen des brevets

(11) Publication number: **0 132 339 B1**

# EUROPEAN PATENT SPECIFICATION

(45) Date of publication of patent specification: **05.02.92**

(51) Int. Cl.⁵: **C08L  69/00,** C08L  67/02, C08L 25/02

(21) Application number: **84304665.7**

(22) Date of filing: **09.07.84**

(54) Pigmented thermoplastic resin compositions.

<table>
<tr><td>

(30) Priority: **22.07.83 US 513741**
 **30.03.84 US 594161**

(43) Date of publication of application:
**30.01.85 Bulletin  85/05**

(45) Publication of the grant of the patent:
**05.02.92 Bulletin  92/06**

(84) Designated Contracting States:
**AT BE CH DE FR GB IT LI LU NL SE**

(56) References cited:
**EP-A- 0 050 262**
**US-A- 4 082 895**
**US-A- 4 180 494**
**US-A- 4 393 169**

</td><td>

(73) Proprietor: **ROHM AND HAAS COMPANY**
**Independence Mall West**
**Philadelphia Pennsylvania 19105(US)**

(72) Inventor: **Weese, Richard Henry**
**R. R. 1 Glenwood Drive**
**Washington's Crossing, Pa. 18977(US)**
Inventor: **Crook, Evan Haney**
**1013 Eagle Lane**
**Cherry Hill New Jersey(US)**
Inventor: **Liwak, Susan Marie**
**800 Trenton Road Apt. 214**
**Langhorne, Pa. 19047(US)**

(74) Representative: **Angell, David Whilton et al**
**ROHM AND HAAS (UK) LTD. European Oper-**
**ations Patent Department Lennig House 2**
**Mason's Avenue**
**Croydon CR9 3NB(GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention is concerned with pigmented thermoplastic resin compositions especially compositions comprising pigmented polyester and/or polycarbonate resins having multi-stage polymer compounded therewith to provide impact resistance while improving depth of color and combatting non-uniform color appearance when the compounded pigmented polymer is molded to form a shaped article.

The impact strength of polyesters and/or polycarbonates is improved by compounding the resin with an impact modifier. However, when said compounded pigmented polyester or polycarbonate resin is molded, the improvement of impact strength is accomplished at the cost of the molded article having a non-uniform color appearance. This is often manifested by a whitish or washed out non-uniform mother of pearl appearance (pearlescence), particularly in the area of the article which is nearest the gate or gates of the mold. Further, the visual appearance of the intensity of the color itself in the molded article also suffered and the molded article was not as pleasing to the consumer.

U.S. Patent 3,971,835 is directed to an impact modifier-vinyl halide polymer composition. The impact modifier is a three stage sequentially produced graft polymer which comprises a hard first stage polymer which may be a styrenic material and which may have up to 50 weight percent of a monovinylidene monomer interpolymerizable therewith. Additionally, a crosslinking agent may also be present in the first stage. The second stage is a rubbery polymer which may be a crosslinked alkyl acrylate, such as butyl acrylate. The final stage is a rigid thermoplastic polymer such as methyl methacrylate. U.S. 3,971,835 also teaches that pigments may be incorporated in the modifier-vinyl halide polymer system. The '835 patent does not address itself to the problem of non-uniform color appearance such as pearlescence in the molded article and further does not address itself to the problem of the intensity of color. The '835 patent deals with the problem of improving the impact resistance and clarity of a vinyl halide polymer composition.

U.S. 3,793,402 deals with the problem of haze level of an alkyl methacrylate polymer. The '402 patent provides an impact modifier which may have a crosslinked styrene core, an elastomeric stage and a final hard stage. The elastomeric stage may be a material such as a crosslinked alkyl acrylate and the outer stage may be an alkyl methacrylate such as methyl methacrylate. The '402 patent teaches that coloring materials may be present as part of the composition. U.S. 3,793,402 does not deal with the problem of pearlescence or intensity of color of a pigmented polyester and/or polycarbonate resin.

U.S. 3,162,695 deals with the problem of the flow characteristics of polycarbonate resins. The '695 patent is directed to a two stage graft copolymer having a core of a copolymer of butadiene and styrene and a shell of methyl methacrylate. The '695 patent does not teach the use of a pigment or coloring agent with the polycarbonate. Additionally, because butadiene is a necessary component of the polymer blend, the weatherability of the polycarbonate will be adversely affected because of the presence of butadiene in the core.

U.S. 3,864,428 is directed to a polyester/polycarbonate blend wherein there is present a graft copolymer of a butadiene polymer and a vinyl monomer. The vinyl monomer may be styrene. The butadiene-styrene copolymer is not crosslinked. The composition may have a coloring agent. The problem which was dealt with by the '428 patent was the problem of impact strength along with shapeability and resistance to thermal deformation and good chemical resistance. The '428 patent does not deal with the problem of pearlescence or intensity of color.

U.S. 3,891,719 is directed to a molding composition of a polycarbonate and a graft copolymer of styrene and acrylonitrile or an acrylic ester polymer. The problem which is dealt with by the '719 patent is the tensile strength, elongation and resistance to light and weather. This patent teaches that small amounts of butadiene-containing polymers cause changes in colour under the effect of intense light and/or heat. The '719 patent teaches that pigments may be present in the thermoplastic molding composition. The graft polymers which are used in the '719 patent are all soft core containing materials such as butyl acrylate. The '719 patent does not recognize and does not deal with the problem of pearlescence and intensity of color.

U.S. patent 4,026,970 is directed to a non-pigmented polymer blend wherein a multi-stage polymer serves as a toughener for a thermoplastic resin such as a polyester or a polycarbonate. The core of the '970 multi-stage polymer contains a majority of acrylonitrile and a vinylidene monomer and a graftlinker. The vinylidene monomer may be styrene or a styrenic material. The composition of the '970 patent is a non-pigmented composition and the multi-stage polymer of the '970 patent contains, in the core, less than 50% of a styrenic material. Among the graftlinkers which the '970 patent sets forth is divinyl benzene which is one of the crosslinkers which are used in the present invention. The '970 patent does not recognize or deal with the problem of pearlescence or intensity of color.

None of the patents discussed above recognized the problem of pearlescence and intensity of color of a pigmented polyester and/or polycarbonate resin.

US-A-4393169 discloses the impact modification of polystyrene/polycarbonate mixtures using a sequential polymer with a butadiene-based rubbery stage. The resin mixtures in this reference are unpigmented. This disclosure has no teaching relating to the improvement of impact strength without problems of pearlescence and colour depth in pigmented polycarbonate/polyester resins.

It is one object of this invention therefore to provide a pigmented polyester and/or polycarbonate resin compounded with an impact modifier which, when molded into an article, has good intensity of color, is non-pearlescent and has pleasing visual appearance.

This invention provides a polymer composition comprising from 60 parts to 99.9 parts by weight of pigmented thermoplastic polyester and/or polycarbonate resin and, from 0.1 part to 40 parts of sequentially produced multi-stage polymer comprising:

(a) a polymer core comprising at least 10 percent of the weight of the total of (a) plus (b) plus (c), said core comprising styrenic monomer crosslinking monomer and, optionally non-styrenic non-crosslinking monomer, the units of styrenic monomer making up at least about 50% by weight of the core weight;

(b) a polymeric soft stage immediately subsequent to said core comprising at least 50% by weight ($C_1$ to $C_8$)-alkyl acrylate units, said soft stage also containing units of crosslinker and graftlinker monomer; and

(c) a rigid thermoplastic outer stage.

For the purposes of this specification and claims a soft polymer is a polymer having a Tg of minus $20°C$ or lower and a hard polymer is a polymer having a Tg of $70°C$ or more.

It is surprising to find that pearlescence could be substantially eliminated and intensity of color could be improved when molding a polyester and/or polycarbonate resin which has been compounded with such a three or more stage multi-stage polymer.

All parts and percentages, referred to in this specification and claims, unless indicated otherwise, are by weight.

The core of the multi-stage polymer preferably comprises 10 to 40 percent by weight of the total multistage polymer. Preferably, the content of styrenic monomer units in the core is 50% to 99.9%, more preferably 75 to 99.9%.

Although styrene is the preferred styrenic monomer, other useful styrenic monomers include substituted styrenes such as alpha-methylstyrene, monochlorostyrene, tertiarybutylstyrene, vinyl toluene, p-isopropyl styrene, 3,4-dimethylstyrene, p-bromostyrene and 3,4-dichlorostyrene. One, or mixtures of more than one, styrenic monomer may of course be used in the polymerisation mixture or mixtures from which the core is made.

If desired a non-styrenic monovinylidene comonomer (second monomer) may also be incorporated in the core, generally in an amount of up to about 49% and preferably from 1% to 20%.

Suitable non-styrenic monovinylidene monomers which may be used as a comonomer with the styrenic material to prepare the core include alkyl methacrylates such as methyl methacrylate, ethyl methacrylate, butyl methacrylate, hexyl methacrylate and octyl methacrylate; vinyl esters; acrylonitrile, methacrylonitrile acrylic acid, and methacrylic acid.

If an alkyl methacrylate is to be used as a comonomer in preparing the core, then such alkyl methacrylate should preferably be one which has from 1 to 8 carbon atoms in the alkyl portion thereof. Furthermore, alkyl acrylates having from 1 to 8 carbon atoms in the alkyl portion, may also be used. Such alkyl acrylates include methyl acrylate, ethyl acrylate and butyl acrylate.

The crosslinking agent used for the styrenic core is polyethylenically unsaturated monomer which has a plurality of addition polymerizable reactive groups all of which polymerize at substantially the same rate of reaction. The crosslinking agent is preferably used in an amount to provide 0.1 to 10% crosslinking units based on the weight of the core and preferably, from 0.1 to 5%.

Suitable polyethylenically unsaturated crosslinking monomers include polyvinyl benzene, divinyl esters of di- or tri-basic acids; dialkyl esters of poly functional acids; dialkyl esters of poly functional acids; diallyl esters of poly functional acids; divinyl esters of polyhydric alcohols; di- or tri-methacrylic acid esters of polyhydric alcohols. Mixtures of crosslinker monomers may be used.

Useful crosslinkers, more specifically, include divinyl adipate, dialkyl phthalate such as diethyl phthalate, diallyl maleate, diallyl fumarate, divinyl ether of ethylene glycol, ethylene glycol dimethacrylate, propylene glycol dimethacrylate, 1,3-butylene glycol dimethacrylate, 1,4-butylene glycol dimethacrylate, ethylene glycol diacrylate, propylene glycol diacrylate, 1,3-butylene glycol diacrylate, 1,4-butylene glycol diacrylate, divinyl benzene and trivinyl benzene.

Upon completion of the polymerization of the core, that is, upon substantial exhaustion of the monomers in the core polymerization mix, the soft stage is then formed by polymerization at the surface of the core phase. The soft stage comprises from 40 to 80 percent of the multi-stage polymer and preferably from 60 to 80 percent.

The especially useful soft stage monomers include ethyl acrylate, n-butyl acrylate, 2-ethylhexyl acrylate and isobutyl acrylate.

The soft stage may be prepared using a single monomer system or a comonomer system. Comonomer which would itself yield a hard polymer may be present only in such an amount that the stage remains soft, usually this is a maximum of 50% of the weight of the soft stage. Such comonomer includes non-crosslinking vinylidene monomer such as acrylonitrile, alkyl methacrylates having from 1 to 8 carbon atoms in the alkyl portion, especially methyl methacrylate, ethyl methacrylate, isopropyl methacrylate and t-butyl methacrylate, styrenic monomer such as styrene or any of the other styrenic monomers mentioned as suitable for preparation of the core, isobornyl methacrylate, isoprene and chloroprene.

Although the comonomer used to prepare the soft stage may comprise up to about 50% of the soft stage, it is preferred that such comonomers are present in an amount of at most 25% of the soft stage.

The soft stage is prepared using crosslinking and/or graftlinking agents. A useful graftlinking agent is a polyethylenically unsaturated monomer which has a plurality of addition polymerizable reactive groups, at least one of which polymerizes at a substantially different rate of polymerization from at least one other of the reactive groups so that this remains available for, polymerization in the subsequent stage.

Among useful graftlinking monomers include allyl methacrylate, allyl acrylate, allyl, methallyl and crotyl esters of acrylic acid, methacrylic acid, maleic acid (mono-and di- esters); fumaric acid (mono- and di- esters) and itaconic acid (mono- and di- esters); allyl, methallyl and crotyl vinyl thioether; N-allyl, methallyl or crotyl maleamide; vinyl ester of 3 butenoic and 4-pentenoic acid, triallyl cyanurate; O-allyl, methallyl or crotyl O-alkyl, aryl, alkaryl or aralkyl, p-vinyl, aryl, or methallyl phosphonate, triallyl, trimethallyl or tricrotyl phosphate; O-vinyl, O, O-diallyl, dimethallyl or dicrotyl phosphate cyclo alkenyl esters of acrylic acid, methacrylic acid, maleic acid (mono and di- esters), fumaric acid (mono and di- esters), itaconic acid (mono and di-esters), such as 2,3, or 4 cyclohexenol acrylate, bicyclo (2,2,1) hept-5-ene-2-yl esters of acrylic acid, methacrylic acid, maleic acid (mono or di- esters), fumaric acid (mono and diesters), and itaconic acid (mono and di- esters); vinyl ethers and vinyl thioethers of cycloalkanols and cycloalkene thiols such as vinyl cyclohex-4-ene-1-ylether, vinyl ether of bicyclo (2,2,1) hept-5 ene-2-Ol, vinyl esters of cyclo alkene carboxylic acid or vinyl bicyclo (2,2,1) hept-5 ene-2-carboxylate and diallyl maleate.

Useful crosslinking agents for the soft stage include trimethylol propane tri-acrylate, the divinyl esters of di- or tri- basic acids, such as divinyl adipate; dialkyl esters of polyfunctional acids such as dialkyl phthalate, diallyl esters such as diallyl maleate or diallyl fumarate, divinyl ethers of polyhydric alcohols such as the divinyl ether of ethylene glycol; and di- and tri- methacrylate and acrylic esters of polyhydric alcohols for example, trimethylol propane triacrylate and trimethacrylate, ethylene glycol dimethacrylate, propylene glycol dimethacrylate, 1,3-butylene glycol dimethacrylate, 1,4-butylene glycol dimethacrylate, ethylene glycol diacrylate, 1,2- or 1,3-propylene glycol diacrylate, and 1,3- or 1,4- butylene glycol diacrylate.

The crosslinker and the graftlinker may each be present, in an amount of from 0.1 to 10% of the weight of the soft stage, preferably 0.1 to 5%.

The outer stage is polymerized in the presence of the core and the soft stage, which itself has been polymerized in the presence of the core. However, intermediate stages, between the soft stage and the final rigid stages may also be provided. The outer stage and any such intermediate stages, the soft stage and the core make up the whole multi-stage polymer.

The hard outer stage is polymerized from monomer which will yield a rigid, hard outer stage. Among the monomers which themselves will do this are alkyl methacrylates having from 1 to 8 carbons in the alkyl portion thereof, styrene, substituted styrene, acrylonitrile and methacrylonitrile. Of course comonomers which alone would yield soft polymer may be present as long as the final stage overall remains hard.

Specific monomers which will give a hard final stage include methyl methacrylate, ethyl methacrylate, isopropyl methacrylate, t-butyl methacrylate, acrylonitrile and isobornyl methacrylate.

The outer stage may contain graftlinking and/or crosslinking agents, if desired, such as those mentioned as useful in the soft stage.

One or more stages intermediate between the soft and final stages may be present and such intermediate stages may be either hard or soft stages or a mixture of hard and soft stages may be present in any sequence.

A preferred intermediate stage however would comprise units of styrenic monomer so that this preferred stage would satisfy, as regards its composition, the requirements of the styrenic core as set out above.

For example such a preferred styrenic intermediate stage may be crosslinked, in the same manner as the styrenic core and the useful amount of crosslinker which is the same as is used for crosslinking the styrenic core.

If a styrenic intermediate stage is present, then it is preferred that the core make up 10 to 30 percent

4

by weight, based on the weight of the multi-stage polymer and the styrenic intermediate stage may constitute up to 20 weight percent, based on the weight of the multi-stage polymer.

Other monomers may also be used to form one or more intermediate stages which may be soft or hard. Candidate monomers will be apparent to one skilled in the art and may include the monomers set forth herein for formation of a soft stage or a hard stage.

The amount of pigment used in the composition may preferably vary from 0.1 part by weight per 100 parts of resin (polyester and/or polycarbonate) to about 30 parts by weight per 100 parts of resin. Generally, the amount of pigment used will be from 2 to 15 parts by weight, per hundred parts of resin.

Any pigment may be used which is compatible with a polyester and/or polycarbonate, for example iron oxide reds and browns; cadmium and mercury sulfides; chromates, molybdates, aluminates and titanates; carbon black; and organic pigments such as benzenoid pigments.

The pigment may be added to the blend in any convenient manner, for example by adding it to the multi-stage polymer, which is subsequently compounded with the polycarbonate and/or polyester resin, or by adding it to the polyester and/or polycarbonate resin before, during or after its compounding with the multi-stage polymer.

The pigmented polycarbonate and/or polyester resin preferably comprises 75 to about 98 percent of the blend of the invention.

Any thermoplastic polycarbonate may be used in the present invention, for example, bisphenol A derived polycarbonates and, specifically, the polycarbonate of 2,2-(4,4'-dihydroxy-diphenyl) propane, polycarbonates of di(monohydroxyphenyl)-substituted aliphatic hydrocarbons, in which both hydroxy-phenyl groups are attached to the same carbon atom of the hydrocarbon such as the polycarbonates of (4,4'-dihydroxy-diphenyl)-methane; 1,1-(4,4'-dihydroxy-diphenyl)-cyclohexane; 2,2(4,4'-dihydroxy-diphenyl)-butane; 2,2-(4,4'-dihydroxy-diphenyl)-pentane; 2,2(4,4'-dihydroxy-diphenyl)-hexane; and 2,2(4,4'-dihydroxy-diphenyl)-heptane. Other polycarbonates which may be used are those which are produced by reacting dihydric phenols such as resorcinol, hydroquinone or dihydroxy diphenylene; in particular, bis-(hydroxyphenyl)-alkanes such as bis-(4-hydroxyphenyl)-2,2-propane (bisphenol A) or bis-(4-hydroxy-3,5-dimethylphenyl)-2,2-propane. Further useful polycarbonates are those derived from trinuclear bisphenols such as alpha, alpha'-bis-(4-hydroxyphenyl)-p-diisopropylbenzene; halogenated bis-(hydroxyphenyl)-alkanes; bis-(hydroxyphenyl)-cyclo-alkanes, sulphones,-sulphoxides, -ethers or-sulfides optionally in admixture with glycols; with derivatives of carbonic acid, for example its diesters or dihalides and also optionally in conjunction with lesser quantities of dicarboxylic acids or derivatives thereof suitable for ester formation. Other polycarbonates are well known to one skilled in the art.

Useful polyesters include polyesters having chain units containing an aromatic ring in the main chain of the polymer. The aromatic ring may, optionally, be a substituted aromatic ring. Examples of the substituent for the aromatic ring are halogen atoms such as chlorine or bromine, $C_1$-$C_8$ alkyl groups such as a methyl, ethyl, butyl, 2-ethylhexyl, or tertiary isobutyl. Such polyesters may be obtained by reacting an aromatic dicarboxylic acid or ester-forming derivative thereof with glycol in a known manner. Such reactions are generally referred to as direct esterification or as ester interchange reactions.

The acid component of the polyester may be one such as naphthalene-2,6-dicarboxylic acid and terephthalic acid which may have a substituent, for example those set forth above as well as ester-forming derivatives thereof, such as the lower alkyl esters. The glycols may be polymethylene glycols having 2 to 8 carbon atoms such as 1,4-butanediol and 1,6-heptanediol. A portion of the acid component and/or the glycol component may be replaced by other acids or other ester-forming derivatives thereof. For example, other acid components may be isophthalic acid, p-hydroxybenzoic acid, adipic acid, sebacic acid, naphthalene dicarboxylic acids other than the naphthalene-2,6-dicarboxylic acid, and ester forming derivatives thereof. Examples of other glycol components which may be used are 1,4-cyclohexanediol, bisphenol A and ester-forming derivatives thereof. If a portion of the acid component and/or the glycol component is replaced by other acids or ester-forming derivatives, then it is preferred that such replacement be in an amount of up to about 30 mole percent.

Examples of specific polyesters which are used in this invention are, the poly($C_1$ to about $C_8$) alkylene terephthalates such as polyethylene terephthalate, polytetramethylene terephthalate, polyhexamethylene terephthalate, polyethylene-2,6-naphthalate, polytetramethylene-2,6-naphthalate, polyhexamethylene-2,6-naphthalate, polypropylene terephthalate, polybutylene terephthalate, polycyclohexene terephthalate and polyethylhexyl terephthalate.

A particularly preferred resin composition contains a mixture of polycarbonate resin and polyester resin in equal weight amounts.

The multi-stage polymer of the present invention may be prepared in any convenient manner. Such preparation methods are well known to those skilled in the art.

5

Briefly, the multi-stage, sequentially produced polymers may be prepared by emulsion polymerizing the monomers used to prepare the core or by emulsion polymerizing the soft stage as well as subsequent stages, in the presence of previously formed particles comprising the earlier stages which, in the case of the soft stage, is the polymeric core. The polymerizations are accomplished in the presence of a catalyst and such polymerizations may be conducted in the presence of a polymerization regulator which serves as a chain transfer agent.

The emulsifier utilized will control the particle size of those stages subsequent to polymerization of the core. The soaps which may be used in emulsion polymerization are preferably used in the minimum amount necessary to give the desired result and the resultant multi-stage polymer may be isolated by coagulation or by spray drying.

The multi-stage sequential polymerization may conveniently be accomplished at a temperature of from $0°$ C. to $125°$ C. and preferably from $30°$ C. to $95°$ C.

A chain transfer agent may also be present during the polymerization to control the molecular weight of the stages.

The final particle size of the sequentially produced polymer may conveniently vary from 150 to 500 nanometers and preferably from about 200 to about 450 nanometers.

Other components may be added to the compositions after polymerization such as, for example, light stabilizers or oxidation inhibitors. Additional components are well known and will be apparent to one skilled in the art.

Blending of the multi-stage polymer and the polyester and/or polycarbonate resin may be accomplished in any convenient manner.

The multi-stage polymer and the polyester and/or polycarbonate can be milled to form a well dispersed mixture in an extruder, a roll mill or like equipment to prepare a molding composition.

In a particularly preferred blending method, the polycarbonate and/or polyester are dried at a temperature of from $105°$ C. to $120°$ C. for from 12 to 20 hours. The polyester and/or polycarbonate is then blended with pigment. The multi-stage polymer is then blended with the pigmented polyester and/or polycarbonate resin using, for example, a 2.54 cm (one inch) single screw extruder at a screw speed of from about 40 to about 80 revolutions per minute and a temperature, within the extruder, of from about $204°$ C. ($430°$ F.) to $260°$ C ($500°$ F). The compounded pellets are then redried using the drying conditions set forth above. The dried, compounded pellets may then be injection molded or molded using another molding method well known to the art.

In the Examples which follow, which detail some embodiments of the invention for the purposes of illustration only, the multi-stage polymers are prepared by sequential emulsion polymerization in the aforedescribed manner.

The materials used in compounding the components of the Examples are Merlon M-50, a polycarbonate having an intrinsic viscosity of 1.5 and commercially available from Mobay Chemical Corporation; Celanex 2002-2, a poly(butylene terephthalate) having an intrinsic viscosity of 1.0 and commercially available from Celanese Corporation; Carodel PET 5-822C, a poly(ethylene terephthalate) having an intrinsic viscosity of 0.8 and obtained from Rohm and Haas Company; and red pigment C-PES-589, a blend of 71.2% by weight of a polymeric carrier, 3.4% of an organic red pigment, 2.5 percent of an inorganic dispersant and 22.9% of an inorganic red pigment, obtained from Reed Plastics Corporation.

The blending of the pigment, polyester and/or polycarbonate is accomplished in the following manner. Prior to the mixing of the red pigment with the polycarbonate and/or polyester, the resins are dried at $110°$ C. for approximately 16 hours. The dried pellets are then combined and mixed with the red pigment and multi-stage polymer, when present as part of the composition. The compounding is accomplished in a 2.5 cm (one inch) Killion single screw extruder at a temperature of from $232°$ C. ($450°$ F.) to $249°$ C. ($480°$ F.) and a screw speed of 50 revolutions per minute. The compounded pellets are then redried using the conditions specified above. The compounding of the compositions is the same regardless of whether the multi-stage polymer is present and regardless of whether only a polycarbonate or only a polyester is present.

For the tests set forth in the Examples, the compounded resin compositions are injection molded on an Egan Auto Molder at a temperature of $274°$ C. ($525°$ F.), a screw speed of 50 revolutions per minute, a ram time of 8 seconds, and an injection pressure of 800 psi and a mold temperature of from $62°$ C ($144°$ F) to $92°$ C ($197°$ F). The injection molded test pieces which are made are double gated plaques measuring 15.24 cms by 10.16 cms by 0.32 cm (6 inches by 4 inches by 1/8 inch).

In the Examples which follow, the notched Izod impact tests are determined on a 0.32 cm (1/8 inch) thick sample at $0°$ C., $10°$ C., and $23°$ C. Notched Izod is determined according to ASTM Method D-256.

The instrumented vertical height impact tests (VHIT) is determined on a Dynatup machine available from General Research Corporation. This test measures the energy required to produce at least a crack in a 0.32 cm (1/8 inch) thick specimen sample. The test involves dropping a hemispherical dart, at a speed of 3.05 m (10 feet) per second, onto the sample which is suspended between two clamps on a platform.

Color appearance of the sample is determined visually for intensity of color and the presence or absence of pearlescence.

In the Examples the following abbreviations have the following meanings.

| | |
|---|---|
| PC | = polycarbonate |
| PBT | = poly(butylene terephthalate) |
| PET | = poly(ethylene terephthalate) |
| RP | = red pigment |
| BA | = n-butyl acrylate |
| TMPTA | = trimethylol propane triacrylate |
| DALM | = diallyl maleate |
| MMA | = methylmethacrylate |
| S | = styrene |
| DVB | = divinyl benzene |

A single slash is used to distinguish between the components of a single stage and a double slash is used to denote that a different stage commences after the doubled slash.

In the Examples it will be apparent that compositions of this invention have substantially the same impact strength as the comparative compositions. It will also be apparent that the intensity of color and absence of pearlescence obtained with compositions of the present invention is greatly improved over the comparative compositions.

MULTI-STAGE COMPOSITIONS USED IN THE INVENTION

| Ex. | S/ | DVB// | BA/ | TMPTA/ | DALM// | MMA |
|---|---|---|---|---|---|---|
| 1 | 17.15/ | 0.35// | 64.0/ | 0.65/ | 0.35// | 17.5 |
| 2 | 17.15/ | 0.35// | 64.35/ | 0.325/ | 0.325// | 17.5 |

| Ex. | S/ | DVB// | BA/ | TMPTA/ | DALM// | S/ | DVB// | MMA |
|---|---|---|---|---|---|---|---|---|
| 3 | 4.9/ | 0.1// | 64.35/ | 0.325/ | 0.325// | 12.25/ | 0.25// | 17.5 |
| 4 | 9.8/ | 0.2// | 64.35/ | 0.325/ | 0.325// | 7.35/ | 0.15// | 17.5 |
| 5 | 17.15/ | 0.35// | 64.0/ | 0.65/ | 0.35// | 0.0/ | 0.0// | 17.5 |
| 6 | 17.15/ | 0.35// | 64.0/ | 0.65/ | 0.35// | 0.0/ | 0.0// | 17.5 |
| 7 | 17.15/ | 0.35// | 64.0/ | 0.65/ | 0.35// | 0.0/ | 0.0// | 17.5 |

| Ex. | S/ | DVB// | BA/ | TMPTA/ | DALM// | MMA |
|---|---|---|---|---|---|---|
| 8 | 4.9/ | 0.1// | 76.72/ | 0.39/ | 0.39// | 17.5 |
| 9 | 9.8/ | 0.2// | 71.78/ | 0.36/ | 0.36// | 17.5 |
| 10 | 14.7/ | 0.3// | 66.82/ | 0.34/ | 0.34// | 17.5 |
| 11 | 19.6/ | 0.4// | 61.88/ | 0.31/ | 0.31// | 17.5 |
| 12 | 24.5/ | 0.5// | 56.92/ | 0.29/ | 0.29// | 17.5 |
| 13 | 39.2/ | 0.8// | 42.08/ | 0.21/ | 0.21// | 17.5 |
| 14 | 17.5/ | 0.00175// | 64.0/ | 0.65/ | 0.35// | 17.5 |
| 15 | 17.5 | 0.0175// | 64.0/ | 0.65/ | 0.35// | 17.5 |
| 16 | 17.4/ | 0.0875// | 64.0/ | 0.65/ | 0.35// | 17.5 |

| Ex. | S/ | DVB/ | MMA// | BA/ | TMPTA/ | DALM// | MMA |
|---|---|---|---|---|---|---|---|
| 17 | 17.15/ | 0.35/ | 3.5// | 60.57/ | 0.62/ | 0.31// | 17.5 |
| 18 | 17.15/ | 0.35/ | 0.0// | 64.0/ | 0.65/ | 0.35// | 17.5 |

EP 0 132 339 B1

## CONTROL COMPOSITIONS USED FOR COMPARATIVE PURPOSES

| Control | Resin and Ratio | Multistage Polymer and Amounts Used (Parts per hundred Parts of Resin) | Amount of Pigment Used (Parts/Hundred Parts of Resin) | Control Used For Comparison With Ex. No. |
|---|---|---|---|---|
| A | PC-50+PBT-50 | None | None | 1-18 |
| B | PC-50+PBT-50 | None | 2.0 | 1-18 |
| C | PC-50+PET-50 | None | None | 1-18 |
| D | PC-50+PET-50 | None | 2.0 | 1-18 |
| E | PC-50+PBT-50 | BA/TMPTA/DALM//MMA 6 and 12 79.12/0.4/0.48//20.0 | 2.0 | 1-4 |
| F | PC-100 | BA/TMPTA/DALM//MMA 12 79.12/0.4/0.48//20.0 | 2.0 | 5 |
| G | PBT-100 | Same as F 12 | 2.0 | 5 |
| H | PET-100 | Same as F 12 | 2.0 | 5 |
| I | PC-75+PBT-25 | Same as F 12 | 2.0 | 6 |
| J | PC-75+PET-25 | Same as F 12 | 2.0 | 6 |
| K | PC-25+PBT-75 | Same as F 12 | 2.0 | 7 |

| | L | M | N | O | P | Q | R |
|---|---|---|---|---|---|---|---|
| | PC-50+PBT-50 | PC-50+PBT-50 | PC-50+PBT-50 | PC-50+PBT-50 | PC-50+PBT-50 | PC-50+PBT-50 | PC-50+PBT-50 |
| | Same as F | BA/TMPTA/DALM//S//MMA | BA/TMPTA/DALM//S/DVB//MMA/TMPTA | S//BA/TMPTA/DALM//MMA | S//BA/TMPTA/DALM//S//MMA | MMA//BA/TMPTA/DALM//MMA | MMA/TMPTA//BA/TMPTA/DALM//MMA |
| | | 64.35/0.325/0.325//17.5//17.5 | 64.35/0.325/0.325//17.15//0.35//17.5/0.0175 | 17.5//64.35/0.325/0.325//17.5 | 10.0//64.35/0.325/0.325//7.5//17.5 | 17.5//64.35/0.325/0.325//17.5 | 17.5/0.0175//64.35/0.325/0.325//17.5 |
| | 12 | 6 and 12 | 6 and 12 | 6 and 12 | 6 and 12 | 6 and 12 | 6 and 12 |
| | 2.0 | 2.0 | 2.0 | 2.0 | 2.0 | 2.0 | 2.0 |
| | 17-18 | 1-18 | 1-18 | 1-18 | 1-18 | 1-18 | 1-18 |

Examples 1-4

Each of the compositions of Examples 1 to 4 and control E are compounded, with 50 parts of polycarbonate (Merlon M-50) plus 50 parts of poly(butylene terephthalate) (Celanex 2002-2) and 2.0 parts of red pigment (C-PES-589) on the one inch Killion single screw extruder, as described in the "General Procedure" and are then injection molded as described earlier. The impact strength of each molded sample is determined and the color characteristics of each sample are observed. The results are set forth in Table 1.

EP 0 132 339 B1

## TABLE 1

| Example No. | Parts of Multi-Stage Polymer/100 Parts of Resin | Notched Isod Impact Nm per 2.54 cm (ft.-lbs./in.) | | | Dynatup Impact at 23°C Nm (in.-lbs.) | Color of Molded Sample |
|---|---|---|---|---|---|---|
| | | 23°C | 10°C | 0°C | | |
| 1 | 6 | 8.43(6.2) | 2.99(2.2) | 2.18(1.6) | 67.8 (600) | For both samples – no pearlescence seen. Marked reduction in the prominence of the weld lines compared to Control E.Uniform and intense color. |
| 1 | 12 | 20.4(15.0) | 8.57(6.3) | 4.22(3.1) | 62.2 (550) | |
| 2 | 6 | 4.76(3.5) | 3.13(2.3) | 2.58(1.9) | 67.8 (600) | For both samples – slight pearlescence seen at the gates of the molded article. Marked reduction in the prominence of the weld line compared to Control E. Uniform deep color. |
| 2 | 12 | 18.6(13.7) | 11.03(8.1) | 4.62(3.4) | 68.9 (610) | |
| 3 | 6 | 3.94(2.9) | 3.4(2.5) | 2.58(1.9) | 68.9 (610) | For both samples – slight pearlescence seen at the gates of the molded sample. Marked reduction in the prominence of the weld line compared to Control E. Improvement in the uniformity and depth of color compared to Control E. |
| 3 | 12 | 18.2(13.4) | 11.2(8.2) | 4.62(3.4) | 67.8 (600) | |

## TABLE 1 (cont'd)

| Example No. | Parts of Multi-Stage Polymer/100 Parts of Resin | Notched Isod Impact Nm per 2.54 cm (ft.-lbs./in.) 23°C | 10°C | 0°C | Dynatup Impact at 23°C Nm (in.-lbs.) | Color of Molded Sample |
|---|---|---|---|---|---|---|
| 4 | 6 | 10.5(7.7) | 3.54(2.6) | 2.86(2.1) | 67.8 (600) | For both samples - very slight pearlescence at the gates of the molded sample. Marked reduction in the prominence of the weld line compared to Control E. Uniform deep color superior to the color obtained in Control E. |
| 4 | 12 | 19.0(14.0) | 11.0(8.1) | 4.62(3.4) | 67.8 (600) | |
| Control E | 6 | 10.7(7.9) | 3.94(2.9) | 3.4(2.5) | 64.4 (570) | For both samples - pearlescence at both entrance gates. Weld lines appear very prominent. Color is non-uniform and not very intense. |
| Control E | 12 | 21.4(15.7) | 11.7(8.6) | 4.62(3.4) | 67.8 (600) | |

Table I demonstrates the efficacy of compositions according to this invention in improving uniformity of color, depth of color and in eliminating or substantially reducing pearlescence.

In order to establish that compounded non-impact modified blends of polycarbonate and polyester have poor impact resistance but good color characteristics, the data of Table II is presented. In Table II, Controls A and C had no pigment and Controls B and D both had the red pigment specified in this example.

12

**TABLE II**

| Example No. | Parts of Multi-Stage Polymer/100 Parts of Resin | Notched Izod Impact Nm per 2.54 cm (ft.-lbs./in.) | | | Dynatup Impact at 23°C Nm (in.-lbs.) | Color of Molded Sample |
|---|---|---|---|---|---|---|
| | | 23°C | 10°C | 0°C | | |
| Control A | None | 1.90(1.4) | 1.63(1.2) | 1.5(1.1) | 62.2 (550) | — |
| Control C | None | 1.32(0.97) | 0.95(0.70) | 0.88(0.65) | 74.6 (660) | Controls A and C are non-pigmented and no observations could be made concerning color. |
| Control B | None | 2.04(1.5) | 1.63(1.2) | 1.5(1.1) | | |
| Control D | None | 1.29(0.95) | 1.09(0.80) | 0.75(0.55) | 68.9 (610) | For Controls B and D, no pearlescence is observed at the entrance gates. The weld line is barely seen and the color is intense and uniform. |

Examples 5-7

Examples 5 to 7 demonstrate the efficacy of the compositions of this invention when the resin is 100 parts of polycarbonate of poly(butylene terephthalate) or poly(ethylene terephthalate).

The procedure of Examples 1 to 4 are repeated except that the resin used, or blend thereof, is as indicated in Table III. The pigment used, and amount thereof, is the same as is set forth in Examples 1-4. The results are set forth in Table III.

**TABLE III**

| Example No. | Resin Used and Amount (Parts) | Parts of Multi-Stage Polymer/100 Parts of Resin | Notched Izod Impact Nm per 2.54 cm (ft.-lbs./in.) 23°C | 10°C | 0°C | Dynatup Impact at 23°C Nm (in.-lbs.) | Color of Molded Sample |
|---|---|---|---|---|---|---|---|
| 5 | PC-100 | 12 | 20.1(14.8) | 19.1(14.0) | 20.1(14.8) | 57.6 (510) | Very slight pearlescence at the gates of the molded sample. Weld lines barely seen. Uniform intense color. |
| 5 | PBT-100 | 12 | 1.63(1.2) | 1.09(0.8) | 1.22(0.9) | 66.7 (590) | Very slight pearlescence at the gates of the molded sample. Weld lines not seen. Uniform intense color. |
| 5 | PET-100 | 12 | 1.90(1.4) | 1.22(0.9) | 0.82(0.6) | 64.4 (570) | No pearlescence. Weld line barely seen Uniform intense color |
| Control F | PC-100 | 12 | 19.1(14.0) | 19.1(14.0) | 17.7(13.0) | 55.4 (490) | Pronounced pearlescence at and near the gates of the molded sample. Prominent weld line seen. Non-uniform color of reduced intensity. |

14

TABLE III (cont'd)

| Example No. | Resin Used and Amount (Parts) | Parts of Multi-Stage Polymer/100 Parts of Resin | Notched Isod Impact Nm per 2.54 cm (ft.-lbs./in.) 23°C | 10°C | 0°C | Dynatup Impact at 23°C Nm (in.-lbs.) | Color of Molded Sample |
|---|---|---|---|---|---|---|---|
| Control G | PBT-100 | 12 | 1.5(1.1) | 1.63(1.2) | 1.77(1.3) | 70.1 (620) | Slight pearlescence at the gates of the molded sample. Slight weld line seen. Non-uniform color of reduced intensity. |
| Control H | PET-100 | 12 | 2.04(1.5) | 1.5(1.1) | 1.09(0.8) | 63.3 (560) | Slight pearlescence at the gates of the molded sample. Weld line more porminent than in Example 5 (PET-100). Overall uniform color of reduced intensity compared to Example 5 (PET-100). |
| 6 | PC-75 + PBT-25 | 12 | 20.0(14.7) | 1.65(12.1) | 15.1(11.1) | 54.3 (480) | Slight pearlescence at the gates of the molded sample. Weld line barely seen. Color is uniform and intense. |

EP 0 132 339 B1

**TABLE III (cont'd)**

| Example No. | Resin Used and Amount (Parts) | Parts of Multi-Stage Polymer/100 Parts of Resin | Notched Isod Impact Nm per 2.54 cm (ft.-lbs./in.) 23°C | 10°C | 0°C | Dynatup Impact at 23°C Nm (in.-lbs.) | Color of Molded Sample |
|---|---|---|---|---|---|---|---|
| 6 | PC-75 + PET-5 | 12 | 20.7(15.2) | 21.2(15.6) | 15.6(11.5) | 58.8 (520) | No pearlescence. weld line barely seen. Color is intense and uniform. |
| Control I | PC-75 + PBT-25 | 12 | 19.0(14.0) | 17.0(12.5) | 1.37(10.1) | 57.7 (510) | Pronounced pearlescence the gates of the molded sample. Weld lines very prominent. Patchy color of diminished intensity. |
| Control J | PC-75 + PET-25 | 12 | 21.6(15.9) | 22.6(16.6) | 17.3(12.7) | 64.4 (570) | Pronounced pearlescence at the gates of the molded sample. Weld line very prominent. Patchy color of diminished intensity. |

**TABLE III (cont'd)**

| Example No. | Resin Used and Amount (Parts) | Parts of Multi-Stage Polymer/100 Parts of Resin | Notched Izod Impact Nm per 2.54 cm (ft.-lbs./in.) | | | Dynatup Impact at 23°C Nm (in.-lbs.) | Color of Molded Sample |
|---|---|---|---|---|---|---|---|
| | | | 23°C | 10°C | 0°C | | |
| 7 | PC-25 + PBT-75 | 12 | 2.99(2.2) | 2.72(2.0) | 2.45(1.8) | 68.9 (610) | Very slight pearlescence at the gates of the molded sample. Weld line not seen. Color is intense and uniform. |
| Control K | PC-25 + PBT-75 | 12 | 2.99(2.2) | 3.13(2.3) | 2.45(1.8) | 70.1 (620) | Pearlescence at the gate of the molded sample. Prominent weld line. Color of reduced intensity compared to Example 7. |

Examples 8-13

Examples 8 to 13 illustrate the efficacy of this invention using different levels of styrene in the core of the multi-stage polymer.

17

The procedure of Examples 1 to 4 is repeated several times. The polycarbonate and poly(butylene terephthalate) and the amounts thereof as well as the pigment and amounts thereof, used in Examples 1 to 4 are used in these Examples 8 to 13. Compounding is accomplished in the manner of Examples 1 to 4. The results are set forth in Table IV.

**TABLE IV**

| Example No. | Parts of Multi-Stage Polymer/100 Parts of Resin | Notched Isod Impact Nm per 2.54 cm (ft.-lbs./in.) 23°C | 10°C | 0°C | Dynatup Impact at 23°C Nm (in.-lbs.) | Color of Molded Sample |
|---|---|---|---|---|---|---|
| 8 | 12 | 18.6(13.7) | 9.38(6.9) | 6.8(5.0) | 61.0 (540) | Pearlescence seen at and near the gates. Weld line prominent. Color not intense. |
| 9 | 12 | 17.4(12.8) | 10.6(7.8) | 5.58(4.1) | 68.9 (610) | Slight pearlescence seen at the gates of the molded sample. Weld line clearly seen. Color more intense than in Example 8. |
| 10 | 12 | 17.0(12.5) | 8.02(5.9) | 4.49(3.3) | 64.4 (570) | Very slight pearlescence. Weld line barely perceptible. Color is more intense than in Example 9. |
| 11 | 12 | 16.6(12.2) | 7.48(5.5) | 4.35(3.2) | 71.2 (630) | Same as for Example 10. |
| 12 | 12 | 16.6(12.2) | 7.34(5.4) | 3.81(2.8) | 63.3 (560) | Very little pearlescence. Weld line barely seen. Color more intense than in Example 10. |

18

**TABLE IV (cont'd)**

| Example No. | Parts of Multi-Stage Polymer/100 Parts of Resin | Notched Izod Impact Nm per 2.54 cm (ft.-lbs./in.) 23°C | 10°C | 0°C | Dynatup Impact at 23°C Nm (in.-lbs.) | Color of Molded Sample |
|---|---|---|---|---|---|---|
| 13 | 12 | 5.58(4.1) | 3.13(2.3) | 2.45(1.8) | 68.9 (610) | Pearlescence barely perceptible. Weld line barely perceptible. Color very intense and uniform and more intense than in Example 12. |

Examples 14-16

Examples 14 to 16 demonstrate the efficacy of the present invention using different levels of crosslinker in the styrene core.

The procedure of Examples 8 to 13 is repeated. The results are set forth in Table V.

## TABLE V

| Example No. | Parts of Multi-Stage Polymer/100 Parts of Resin | Notched Izod Impact Nm per 2.54 cm (ft.-lbs./in.) 23°C | 10°C | 0°C | Dynatup Impact at 23°C Nm (in.-lbs.) | Color of Molded Sample |
|---|---|---|---|---|---|---|
| 14 | 12 | 1.71(12.6) | 8.30(6.1) | 4.22(3.1) | 68.9 (610) | Pearlescence at the gates of the molded sample. Weld line clearly seen. Color is not very intense. |
| 15 | 12 | 1.74(12.8) | 10.7(7.9) | 4.08(3.0) | 67.8 (600) | Slight pearlescence at the gates of the molded sample. Weld line is prominent. Color is more intense than in Example 14. |
| 16 | 12 | 1.74(12.8) | 6.12(4.5) | 4.22(3.1) | 63.3 (560) | Very slight pearlescence at the gates of the molded sample. Weld line not very prominent. Color is intense and uniform. |

Examples 17-18

Example 17 illustrates the use of a non-styrenic comonomer as part of the core. Example 18 is a composition according to this invention. The results are presented in Table VI.

20

**TABLE VI**

| Example No. | Parts of Multi-Stage Polymer/100 Parts of Resin | Notched Isod Impact Nm per 2.54 cm (ft.-lbs./in.) 23°C | 10°C | 0°C | Dynatup Impact at 23°C Nm (in.-lbs.) | Color of Molded Sample |
|---|---|---|---|---|---|---|
| 17 | 12 | 17.4(12.8) | 6.12(4.5) | 3.94(2.9) | 67.8 (600) | Very slight pearlescence at the gates of the molded sample. Weld line barely seen. Color is intense and uniform. |
| 18 | 12 | 20.4(15.0) | 8.57(6.3) | 4.22(3.1) | 62.2 (550) | No pearlescence seen. Weld line barely seen. Color is intense and uniform. |
| Control L | 12.0 | 21.4(15.7) | 11.7(8.6) | 4.62(3.4) | 67.8 (600) | Pearlescence at both entrance gates. Weld line appears very prominent. Color is non-uniform and not very intense. |

EXAMPLES 19-22

Example 19 demonstrates that despite the presence of styrene as a non-core stage in the multistage polymer, in the absence of styrene in the core, the benefits of this invention are not obtained. Example 20 demonstrates that despite the presence of a crosslinked styrene as a non-core stage in the multi-stage polymer, the benefits of this invention are not obtained. Example 21 demonstrates that the benefits of the

21

present invention are not obtained when non-crosslinked styrene constitutes the core of the multi-stage polymer. Example 22 demonstrates that when non-crosslinked styrene constitutes the core of the multistage polymer, despite the presence of an additional non-core styrene stage, the benefits of the invention are not obtained.

The procedure of Examples 8-13 are repeated. The results are set forth in Table VII.

**TABLE VII**

| Example No. | Parts of Multi-Stage Polymer/100 Parts of Resin | Notched Isod Impact Nm per 2.54 cm (ft.-lbs./in.) 23°C | 10°C | 0°C | Dynatup Impact at 23°C Nm (in.-lbs.) | Color of Molded Sample |
|---|---|---|---|---|---|---|
| 19 (Control M) | 6 | 4.35(3.2) | 2.86(2.1) | 2.45(1.8) | 63.3 (560) | — |
| 19 (Control M) | 12 | 19.3(14.2) | 4.49(3.3) | 3.26(2.4) | 61.0 (540) | For both samples – pearlescence observed at entrance gates and weld line areas. The weld lines are prominent. The color intensity is non uniform. |
| 20 (Control N) | 6 | 4.35(3.2) | 3.54(2.6) | 2.86(2.1) | 64.4 (570) | |
| 20 (Control N) | 12 | 18.5(13.6) | 12.6(9.3) | 4.35(3.2) | 70.1 (620) | For both samples – pearlescence was seen over both entire samples. The weld lines appeared prominent. The color was not uniform and the color intensity was not as great as that obtained with controls B and D. |
| 21 (Control O) | 6 | 3.81(2.8) | 3.4(2.5) | 2.72(2.0) | 68.9 (610) | |

22

TABLE VII (cont'd)

| Example No. | Parts of Multi-Stage Polymer/100 Parts of Resin | Notched Izod Impact Nm per 2.54 cm (ft.-lbs./in.) 23°C | 10°C | 0°C | Dynatup Impact at 23°C Nm (in.-lbs.) | Color of Molded Sample |
|---|---|---|---|---|---|---|
| 21 (Control O) | 12 | 18.0(13.2) | 8.57(6.3) | 3.81(2.8) | 68.9 (610) | For both samples - pearlescence over the entire samples. Weld lines are prominent. The color non uniform. The color intensity is reduced over that obtained in controls B and D. |
| 22 (Control P) | 6.0 | 3.95(2.9) | 3.26(2.4) | 2.72(2.0) | 67.8 (600) | |
| 22 (Control P) | 12 | 16.9(12.4) | 11.0(8.1) | 3.94(2.9) | 67.8 (600) | For both samples - pearlescence over the entire samples. Weld line are prominent. The color non uniform. The color intensity is reduced over that obtained in controls B and D. |

Examples 23-24

Example 23 (Control Q) demonstrates that when the core of the multi-stage polymer is polymerized from methylmethacrylate, a hard polymer, the benefits of this invention are not obtained. Example 24 (Control R) demonstrates that the benefits of this invention are not obtained when the core is prepared from crosslinked methylmethacrylate.

23

The procedure of Examples 8-13 are repeated. The results are set forth in Table VIII.

**TABLE VIII**

| Example No. | Parts of Multi-Stage Polymer/100 Parts of Resin | Notched Izod Impact Nm per 2.54 cm (ft.-lbs./in.) 23°C | 10°C | 0°C | Dynatup Impact at 23°C Nm (in.-lbs.) | Color of Molded Sample |
|---|---|---|---|---|---|---|
| 23 (Control Q) | 6 | 3.94(2.9) | 2.99(2.2) | 2.58(1.9) | 64.4 (570) | For both samples – pearlescence is very pronounced. The weld lines are very prominent. The color is non-uniform and patchy. |
| 23 (Control Q) | 12 | 15.5(11.4) | 6.66(4.9) | 4.08(3.0) | 64.0 (566) | |
| 24 (Control R) | 6 | 4.22(3.1) | 3.67(2.7) | 3.13(2.3) | 67.8 (600) | For both samples – pearlescence is very pronounced. The weld lines appear very prominent. Color is non-uniform and patchy. |
| 24 (Control R) | 12 | 18.2(13.4) | 8.84(6.5) | 4.62(3.4) | 68.9 (610) | |

The sequentially produced multi-stage polymer used in this invention may be used to alter the properties, such as impact resistance, processability, thermal stability and weatherability, and other properties of numerous polymers and polymer blends, both pigmented and non-pigmented. The amount of multi-stage polymer used with such other polymers and polymer blends may vary widely and may be used in the amounts set forth herein in connection with polyesters, polycarbonate and mixtures thereof or they

24

EP 0 132 339 B1

may be used in lesser or greater amounts.

Among the polymers and polymer blends, with which the multi-stage polymer may be used are polyesters, such as those described herein, polycarbonates, and blends thereof; polyphenylene, polyphenylene oxide, and blends thereof; acrylonitrile-styrene-butadiene copolymers, alone or blended with polycarbonate and/or polyvinyl chloride homopolymer or copolymer as well as blends thereof and blends with polycarbonate; acrylic polymers such as polymers and copolymers of acrylic acid, methacrylic acid, alkyl acrylates, particularly those having one to twelve carbon atoms in the alkyl portion, alkyl methacrylates such as those having one to four carbon atoms in the alkyl portion and particularly methyl methacrylate; polybutadiene and copolymers thereof as well as blends thereof, particularly blends with alkyl acrylates; polyvinylhalides, such as polyvinylchloride, and copolymers thereof as well as modified polyvinylhalides which have been modified with one or more of known modifiers for polyvinylhalide such as methacrylate-butadiene-styrene copolymers with or without acrylonitrile as one of the copolymer components, chlorinated polyethylene, styrene, acrylate-styrene copolymers; polypropylene, polypropylene copolymers, polypropylene blended with polymers from ethylenepropylene diene monomers as well as homopolymers of the ethylene propylene diene monomers; polyvinylidene chloride and/or fluoride, polytetrafluoroethylene; polyetherimides and blends thereof; polyethylene homopolymers and copolymers alone or blended with polycarbonate or other polymer; styrene-maleic anhydride copolymers, alone or blended with a polyvinylhalide, e.g., polyvinylchloride, or blended with a polycarbonate or both; polyamides such as Nylon 6 or 66 or 11 or 12 and blends thereof as well as Nylon blended with a polymer from ethylene propylene diene monomer; polyacetal homopolymers and copolymers and blends thereof; styrene-acrylontrile copolymers; blends of polyesters, such as blends of the polyesters set forth herein;

**Claims**

1. A polymer composition comprising from 60 parts to about 99.9 parts by weight of pigmented thermoplastic polyester and/or polycarbonate resin and from 0.1 part to 40 parts of sequentially produced multi-stage polymer comprising;

   (a) a polymer core comprising at least 10 percent of the weight of the multi-stage polymer, said core comprising styrenic monomer, crosslinking monomer and, optionally, non-styrenic non-crosslinking monomer, the units of styrenic monomer making up at least 50 percent by weight of the core weight.

   (b) polymeric soft stage immediately subsequent to said core, said stage having a Tg of minus 20° C or lower and comprising crosslinker units, graftlinker units and at least 50% by weight $(C_1-C_8)$-alkyl acrylate units; and

   (c) a rigid thermoplastic outer stage having a Tg of 70° C or more.

2. A composition according to claim 1 wherein the amount of crosslinker in the core is 0.1 to 10 percent of the weight of the core.

3. A composition according to claim 1 wherein the amount of crosslinker in the core is 1 to 5 percent of the weight of the core.

4. A composition according to claim 1, 2 or 3 wherein the styrenic monomer comprises styrene, alpha-methyl styrene, monochlorostyrene, t-butylstyrene, vinyl toluene, p-isopropyl styrene, 3,4-dimethyl styrene, p-bromostyrene and/or 3,4-dichlorostyrene.

5. A composition according to any preceding claim wherein at least one further stage between said soft stage (b) and said outer stage, is present in the sequential polymer.

6. A composition according to claim 5 wherein said further stage comprises units of styrenic monomer.

7. A composition according to claim 5 or 6 wherein said further stage contains units of crosslinker monomer.

25

**8.** A composition according to any preceding claim wherein the core of the sequential polymer contains 1 to 20 percent by weight of units of non-styrenic non-crosslinking monomer.

**9.** A composition according to any preceding claim wherein the amount of core in the sequential polymer is 10 to 40 percent by weight thereof.

**10.** A composition according to any preceding claim wherein the amount of core in the sequential polymer is 10 to 30 percent by weight thereof and the sequential polymer also contains a further stage comprising styrenic units between said soft stage (b) and said outer stage.

**11.** A composition according to claim 1 wherein the amount of said soft stage (b) in the sequential polymer is 40 to 80 percent by weight thereof.

**12.** A composition according to any preceding claim wherein the soft stage (b) comprises ethyl acrylate, n-butyl acrylate, 2-ethylhexyl acrylate and/or isobutyl acrylate units.

**13.** A composition according to any preceding claim wherein the soft stage (b) content of crosslinker units is 0.1 to 10 percent by weight thereof.

**14.** A composition according to any preceding claim wherein the soft stage (b) content of graftlinker units is 0.1 to 10 percent by weight thereof.

**15.** A composition according to any preceding claim wherein said outer stage comprises units of $C_1$ to $C_8$ alkyl methacrylate(s) especially methyl methacrylate, ethyl methacrylate, isopropyl methacrylate and/or t-butyl methacrylate and/or of acrylonitrile and/or isobornyl methacrylate.

**16.** A composition according to any preceding claim wherein the amount of said outer stage in the sequential polymer is 10 to 35 percent by weight thereof.

**17.** A composition according to any preceding claim wherein the polyester comprises poly($c_1$ to $C_8$)-alkylene terephthalate and/or the polycarbonate comprises aromatic polycarbonate.

**18.** A composition according to any preceding claim wherein the pigment is present in an amount of 0.1 to 15 parts by weight per 100 parts of thermoplastic resin.

**19.** A composition according to any preceding claim wherein said pigmented thermoplastic resin comprises a mixture of polyester, polycarbonate and pigment.

**20.** A composition according to claim 19 wherein the polycarbonate comprises aromatic polycarbonate, the polyester comprises poly(butylene terephthalate) and these two components are preferably present in substantially equal amounts by weight.

**Revendications**

**1.** Une composition de polymères comprenant de 60 parties à environ 99,9 parties en poids d'une: résine polyester et/ou polycarbonate thermoplastique pigmentée et de 0,1 partie à 40 parties d'un polymère produit de façon séquentielle en multiphase comprenant;

(a) un noyau de polymère comprenant au moins 10 pourcent du poids du polymère multiphase, ledit noyau comprenant un monomère styrénique, un monomère de réticulation et, facultativement, un monomère ni styrénique ni de réticulation, les unités de monomères styréniques faisant au moins 50 pourcent en poids du poids du noyau.

(b) une phase molle polymérique immédiatement subséquente audit noyau, ladite phase ayant une transition vitreuse de moins 20°C ou en-dessous et comprenant des unités d'agent de réticulation, des unités d'agent de greffage et au moins 50 pourcent en poids d'unité d'acrylate d'alkyle ($C_1$-$C_8$); et

(c) une phase externe thermoplastique rigide ayant une transition vitreuse de 70°C ou plus.

**2.** Une composition selon la revendication 1, dans laquelle la quantité d'agent de réticulation dans le noyau est de 0,1 à 10 pourcent du poids du noyau.

3. Une composition selon la revendication 1, dans laquelle la quantité d'agent de réticulation dans le noyau est de 1 à 5 pourcent du poids du noyau.

4. Une composition selon la revendication 1, 2 ou 3, dans laquelle le monomère styrénique comprend le styrène, l'alpha-méthyl styrène, le monochlorostyrène, le t-butylstyrène, le vinyl toluène, le p-isopropyl styrène, le 3,4-diméthyl styrène, le p-bromostyrène et/ou le 3,4-dichlorostyrène.

5. Une composition selon l'une quelconque des revendications précédentes, dans laquelle au moins une phase supplémentaire entre ladite phase molle (b) et ladite phase externe, est présente dans le polymère séquentiel.

6. Une composition selon la revendication 5, dans laquelle ladite phase supplémentaire comprend des unités de monomère styrénique.

7. Une composition selon la revendication 5 ou 6, dans laquelle ladite phase supplémentaire contient des unités d'un monomère agent de réticulation.

8. Une composition selon l'une quelconque des revendications précédentes, dans laquelle le noyau du polymère séquentiel contient de 1 à 20 pourcent en poids d'unités d'un monomère ni styrénique ni de réticulation.

9. Une composition selon l'une quelconque des revendications précédentes, dans laquelle la teneur du noyau dans le polymère séquentiel est de 10 à 40 pourcent en poids de celui-ci.

10. Une composition selon l'une quelconque des revendications précédentes, dans laquelle la quantité de noyau dans le polymère séquentiel est de 10 à 30 pourcent en poids de celui-ci et le polymère séquentiel contient aussi une phase supplémentaire comprenant des unités styréniques entre ladite phase molle (b) et ladite phase externe.

11. Une composition selon la revendication 1, dans laquelle la quantité de ladite phase molle (b) dans le polymère séquentiel est de 40 à 80 pourcent en poids de celui-ci.

12. Une composition selon l'une quelconque des revendications précédentes, dans laquelle la phase molle (b) comprend des unités d'acrylate d'éthyle, d'acrylate de n-butyle, de 2-éthylhexyle acrylate et/ou d'acrylate d'isobutyle.

13. Une composition selon l'une quelconque des revendications précédentes dans laquelle la teneur de la phase molle (b) en unités d'agent de réticulation est de 0,1 à 10 pourcent en poids de celle-ci.

14. Une composition selon l'une quelconque des revendications précédentes, dans laquelle la teneur de la phase molle (b) en unités d'agent de greffage est de 0,1 à 10 pourcent en poids de celle-ci.

15. Une composition selon l'une quelconque des revendications précédentes, dans laquelle ladite phase externe comprend des unités de méthacrylate(s) d'alkyle $C_1$ à $C_8$, spécialement du méthacrylate de méthyle, du méthacrylate d'éthyle, du méthacrylate d'isopropyle et/ou du méthacrylate de t-butyle et/ou de l'acrylonitrile et/ou du méthacrylate d'isobornyle.

16. Une composition selon l'une quelconque des revendications précédentes, dans laquelle la quantité de ladite phase externe dans le polymère séquentiel est de 10 à 35 pourcent en poids de celle-ci.

17. Une composition selon l'une quelconque des revendications précédentes, dans laquelle le polyester comprend un Poly[téréphtalate d'alkylène ($C_1$ à $C_8$)] et/ou le polycarbonate comprend un polycarbonate aromatique.

18. Une composition selon l'une quelconque des revendications précédentes, dans laquelle le pigment est présent en une quantité de 0,1 à 15 parties en poids pour 100 parties de résine thermoplastique.

**19.** Une composition selon l'une quelconque des revendications précédentes, dans laquelle ladite résine thermoplastique pigmentée comprend un mélange de polyester, de polycarbonate et de pigment.

**20.** Une composition selon la revendication 19, dans laquelle le polycarbonate comprend du polycarbonate aromatique, le polyester comprend du poly (butylène téréphtalate) et ces deux composants sont de préférence présents en quantités sensiblement égales en poids.

**Patentansprüche**

**1.** Polymerzusammensetzung, umfassend 60 bis etwa 99,9 Gewichtsteile pigmentiertes thermoplastisches Polyester- und/oder Polycarbonatharz und 0,1 bis 40 Teile aufeinanderfolgend hergestelltes Mehrphasen-Polymer, umfassend;

(a) einen Polymerkern, umfassend mindestens 10 Gew.-% des Mehrphasen-Polymers, wobei der Kern monomer auf der Basis von Styrol, vernetzendes Monomer und, gegebenenfalls, nicht-styrolartiges nicht-vernetzendes Monomer umfaßt, und wobei die Monomereinheiten auf der Basis von styrol mindestens 50 Gew.-% des Kerngewichts ausmachen.

(b) eine polymere weiche Phase, die unmittelbar auf den Kern folgt, eine Tg von minus $20^\circ$ C oder darunter aufweist und Vernetzereinheiten, Propfvernetzereinheiten und mindestens 50 Gew.-% ($C_1$-$C_8$)-Alkylacrylateinheiten umfaßt; und

(c) eine harte thermoplastische äussere Phase, die eine Tg von $70^\circ$ C oder darüber aufweist.

**2.** Zusammensetzung nach Anspruch 1, dadurch gekennzeichnet, daß die Menge an Vernetzer im Kern 0,1 bis 10 Prozent des Kerngewichts beträgt.

**3.** Zusammensetzung nach Anspruch 1, dadurch gekennzeichnet, daß die Menge an Vernetzer im Kern 1 bis 5 Prozent des Kerngewichts beträgt.

**4.** Zusammensetzung nach Anspruch 1, 2 oder 3, dadurch gekennzeichnet, daß das Monomer auf der Basis von Styrol Styrol, $\alpha$-Methylstyrol, Monochlorstyrol, t-Butylstyrol, vinyltoluol, p-Isopropylstyrol, 3,4-Dimethylstyrol, p-Bromstyrol und/oder 3,4-Dichlorstyrol umfaßt.

**5.** Zusammensetzung nach einem der vorstehenden Ansprüche, dadurch gekennzeichnet, daß mindestens eine weitere Phase zwischen der weichen Phase (b) und der äusseren Phase in dem aufeinanderfolgenden Polymer vorhanden ist.

**6.** Zusammensetzung nach Anspruch 5, dadurch gekennzeichnet, daß die weitere Phase Einheiten eines Monomers auf der Basis von Styrol umfaßt.

**7.** Zusammensetzung nach Anspruch 5 oder 6, dadurch gekennzeichnet, daß die weitere Phase Einheiten eines vernetzenden Monomers enthält.

**8.** Zusammensetzung nach einem der vorstehenden Ansprüche, dadurch gekennzeichnet, daß der Kern des aufeinanderfolgenden Polymers 1 bis 20 Gew.-% Einheiten von nicht-styrolartigem nicht-vernetzendem Monomer enthält.

**9.** Zusammensetzung nach einem der vorstehenden Ansprüche, dadurch gekennzeichnet, daß die Menge des Kerns in dem aufeinanderfolgenden Polymer 10 bis 40 Gew.-% beträgt.

**10.** Zusammensetzung nach einem der vorstehenden Ansprüche, dadurch gekennzeichnet, daß die Menge des Kerns in dem aufeinanderfolgenden Polymer 10 bis 30 Gew.-% beträgt und das aufeinanderfolgende Polymer ferner eine weitere Phase zwischen der weichen Phase (b) und der äusseren Phase enthält, die Einheiten auf der Basis von Styrol umfaßt.

**11.** Zusammensetzung nach Anspruch 1, dadurch gekennzeichnet, daß die Menge der weichen Phase (b) in dem aufeinanderfolgenden Polymer 40 bis 80 Gew.-% beträgt.

**12.** Zusammensetzung nach einem der vorstehenden Ansprüche, dadurch gekennzeichnet, daß die weiche Phase (b) Ethylacrylat-, n-Butylacrylat-, 2-Ethylhexylacrylat- und/oder Isobutylacrylateinheiten umfaßt.

**13.** Zusammensetzung nach einem der vorstehenden Ansprüche, dadurch gekennzeichnet, daß der Gehalt an Vernetzereinheiten der weichen Phase (b) 0,1 bis 10 Gew.-% beträgt.

**14.** Zusammensetzung nach einem der vorstehenden Ansprüche, dadurch gekennzeichnet, daß der Gehalt an Einheiten des Propfvernetzers der weichen Phase (b) 0,1 bis 10 Gew.-% beträgt.

**15.** Zusammensetzung nach einem der vorstehenden Ansprüche, dadurch gekennzeichnet, daß die äussere Phase Einheiten von $(C_1-C_8)$-Alkylmethacrylat(en), insbesondere Methylmethacrylat, Ethylmethacrylat, Isopropylmethacrylat und/oder t-Butylmethacrylat und/oder von Acrylnitril und/oder Isobornylmethacrylat umfaßt.

**16.** Zusammensetzung nach einem der vorstehenden Ansprüche, dadurch gekennzeichnet, daß die Menge der äusseren Phase in dem aufeinanderfolgenden Polymer 10 bis 35 Gew.-% beträgt.

**17.** Zusammensetzung nach einem der vorstehenden Ansprüche, dadurch gekennzeichnet, daß der Polyester Poly$(C_1-C_8)$-Alkylenterephthalat und/oder das Polycarbonat aromatisches Polycarbonat umfaßt.

**18.** Zusammensetzung nach einem der vorstehenden Ansprüche, dadurch gekennzeichnet, daß das Pigment in einer Menge von 0,1 bis 15 Gewichtsteile pro 100 Teile des thermoplastischen Harzes zugegen ist.

**19.** Zusammensetzung nach einem der vorstehenden Ansprüche, dadurch gekennzeichnet, daß das pigmentierte thermoplastische Harz ein Gemisch von Polyester, Polycarbonat und Pigment umfaßt.

**20.** Zusammensetzung nach Anspruch 19, dadurch gekennzeichnet, daß das Polycarbonat aromatisches Polycarbonat umfaßt, der Polyester Poly(butylenterephthalat) umfaßt und diese beiden Komponenten vorzugsweise in einer im wesentlichen gleichen Gewichtsmenge zugegen sind.